Europäisches Patentamt

(19) European Patent Office

Office européen des brevets

(11) Numéro de publication: **0 228 919**
**B1**

## FASCICULE DE BREVET EUROPEEN

(45) Date de publication du fascicule du brevet:
**31.05.89**

(21) Numéro de dépôt: **86402122.5**

(22) Date de dépôt: **29.09.86**

(51) Int. Cl.⁴: **C10M 135/04**, C07C 148/00
// (C10N30/06, 40:04, 40:20)

(54) Compositions d'oléfines polysulfurées, leur préparation et leur utilisation comme additifs pour lubrifiants.

(30) Priorité: **18.10.85 FR 8515499**

(43) Date de publication de la demande:
**15.07.87 Bulletin 87/29**

(45) Mention de la délivrance du brevet:
**31.05.89 Bulletin 89/22**

(84) Etats contractants désignés:
**BE DE GB IT NL**

(56) Documents cités:
**EP-A- 0 032 281**
**US-A- 2 257 290**

(73) Titulaire: **INSTITUT FRANCAIS DU PETROLE, 4, Avenue de Bois-Préau, F-92502 Rueil-Malmaison(FR)**

(72) Inventeur: **Born, Maurice, 72, rue du Vieux Pont, F-92000 Nanterre(FR)**
Inventeur: **Briquet, Lucienne, 26, avenue de la République, F-92500 Rueil-Malmaison(FR)**
Inventeur: **Parc, Guy, 27, rue du Château, F-92500 Rueil-Malmaison(FR)**

**Description**

L'invention concerne le domaine des additifs organiques sulfurés utilisés notamment pour améliorer les propriétés extrême-pression des lubrifiants ; elle concerne plus particulièrement de nouveaux produits du type oléfines polysulfurées, leur préparation et leur utilisation comme additifs pour lubrifiants.

On trouve décrit dans l'art antérieur un certain nombre de procédés visant à la préparation d'oléfines polysulfurées utilisables comme additifs extrême-pression pour lubrifiants.

En particulier, les brevets US-A-3 471 404 et US-A-3 697 499 décrivent un procédé dont les étapes principales sont les suivantes : (1) On fait réagir du monochlorure de soufre avec un excès d'une oléfine de 2 à 5 atomes de carbone, en particulier l'isobutène, à une température de 20 à 80°C, de manière à former un "adduct" ; (2) On fait réagir l'"adduct" de la première étape avec un sulfure de métal alcalin (de préférence du sulfure de sodium) et du soufre élémentaire, utilisés dans un rapport de 1,8 à 2,2 moles de sulfure métallique par atome-gramme de soufre, la proportion de sulfure de métal alcalin étant en outre de 0,8 à 1,2 mole par mole d'"adduct", et la réaction étant effectuée en présence d'un alcool ou d'un solvant hydro-alcoolique, au reflux ; et (3) On fait réagir le produit obtenu, qui contient de 1 à 3 % de chlore, avec une base minérale en solution aqueuse au reflux, jusqu'à ce que la teneur résiduelle en chlore du produit soit inférieure à 0,5 %.

Il est indiqué dans ces brevets antérieurs que la teneur, en soufre des produits obtenus pouvait être de 40 à 60 % en masse. En réalité, elle est le plus souvent voisine de 46 % en masse. Ces produits peuvent être utilisés comme additifs extrême-pression pour les huiles lubrifiantes, les fluides de transmission ou les graisses, les bases lubrifiantes considérées consistant en des huiles minérales et certaines huiles synthétiques.

Par ailleurs, le brevet des Etats-Unis 4 204 969 décrit un procédé assez voisin pour préparer des oléfines polysulfurées utilisables comme additifs extrême-pression pour huiles lubrifiantes ; ce procédé comprend les étapes principales suivantes :

(1) On fait réagir à environ 30 - 100°C du monochlorure de soufre avec une monooléfine aliphatique de $C_3$ à $C_6$ (en général l'isobutène) de préférence en présence d'un promoteur consistant en un alcool inférieur, de manière à former un "adduct";

(2) On fait réagir cet "adduct" avec du soufre et du sulfure de sodium (préparé par exemple à partir de NaOH, NaHS et/ou $H_2S$) dans un rapport de 0.1 à 0,4 atome-gamme de soufre par mole de sulfure de sodium, en milieu hydroalcoolique à une température allant de 50°C au reflux ; et l'on récupère le produit obtenu sans traitement au moyen d'une base.

Il est indiqué dans l'exemple unique que le produit préparé a une teneur en soufre de 49 % en masse et une viscosité à 37,8°C (100°F) de 8,6 $mm^2/s$ (cSt).

Lorsque, utilisant les procédés décrits dans l'art antérieur, on cherche à augmenter la teneur en soufre des additifs par mise en jeu d'une proportion accrue de soufre élémentaire, par rapport au sulfure ou à l'hydrogénosulfure alcalin mis en jeu, on obtient des produits qui ne sont plus suffisamment solubles dans les huiles lubrifiantes synthétiques (par exemple du type polyalphaoléfines) ou même dans les huiles lubrifiantes minérales, pour être utilisables comme additifs extrême-pression. Par ailleurs, la viscosité cinématique des produits ainsi obtenus est en général trop élevée.

Dans le brevet FR-B-2 563 231, le déposant à déjà décrit un procédé de préparation d'oléfines polysulfurées défini principalement par les étapes suivantes :

(1) On fait réagir au moins un composé choisi parmi le monochlorure et le dichlorure de soufre avec au moins une monooléfine de 2 à 5 atomes de carbone (en général l'isobutène), en une proportion de 1,5 à 2,5 moles de monooléfine par mole de monochlorure et/ou de dichlorure de soufre, formant ainsi un produit d'addition ou "adduct" ;

(2) On met en contact ledit "adduct" et au moins un halogénure d'hydrocarbyle choisi parmi les chlorures, les bromures et les iodures d'alkyles de $C_1$ à $C_{12}$, de cycloalkyles ou de cycloalkyles substitués de $C_5$ à $C_{12}$ et d'arylalkyles ou d'arylalkyles substitués de $C_6$ à $C_{12}$, la proportion dudit halogénure d'hydrocarbyle correspondant à 2 - 40 % en atomes-gramme d'halogène par rapport au nombre d'atomes-gramme d'halogène de l'ensemble formé par ledit "adduct" et ledit halogénure d'hydrocarbyle (soit 0,015 - 0,55 atome-gramme d'halogénure pour 100 g d'"adduct"), avec au moins un composé sulfuré choisi parmi les sulfures, le hydrogénosulfures et les polysulfures de métaux alcalins, d'ammonium ou de métaux alcalino-terreux, mis en jeu en une proportion d'environ 0,4 à 0,8 mole par atome-gramme d'halogène contenu dans l'ensemble formé par ledit "adduct" et ledit halogénure d'hydrocarbyle, et une proportion de soufre élémentaire de 0 à 4 atomes-gramme par mole dudit composé sulfuré, au sein d'un milieu consistant en de l'eau ou un mélange d'eau et de monoalcool aliphatique ;

(3) On chauffe le mélange résultant et, après séparation en deux phases, on récupère l'oléfine polysulfurée dans la phase organique,

(4) et l'on traite éventuellement le produit issu de l'étape (3) par un composé basique tel qu'une base minérale.

Il est indiqué dans ce brevet antérieur que les produits ainsi préparés sont des oléfines polysulfurées, qui peuvent présenter une teneur en soufre allant en général jusqu'à environ 45-55 % en masse et quelquefois davantage (environ 60 % en masse). Leur viscosité cinématique à 100°C varie en fonction de leur teneur en soufre. Elle peut être d'environ 4 à 20 mm²/s. Leur teneur en halogène (principalement en chlore) est en général inférieure à environ 1 % en masse et le plus souvent à environ 0,6 % en masse.

Les produits dont la préparation met en jeu les proportions de soufre élémentaire les plus élevées peuvent être utilisés pour la formulation d'huiles destinées au travail des métaux (coupe, formage, etc.). Il est indiqué qu'il est possible d'utiliser dans cette application les oléfines polysulfurées dont la préparation met en jeu des rapports molaires composé soufré/soufre élémentaire aussi faibles que 0,3/1, ces produits (très riches en soufre) étant encore suffisamment solubles dans les huiles de base d'origine minérale servant à la formulation des lubrifiants pour le travail des métaux (par exemple 100 Neutral Solvent).

Dans ce cas, la concentration d'additif utilisée est en général de l'ordre de 0,5 à 2 % en masse.

Dans la demande de première addition au brevet ci-dessus, FR-A-2 571 380, le déposant a étendu la définition du procédé de préparaton des oléfines polysulfurées au cas où, dans l'étape (2), on met en jeu une proportion d'halogénure d'hydrocarbyle comprise entre environ 40 et 70 % en atomes-gramme d'halogène par rapport au nombre d'atomes-gramme d'halogénure de l'ensemble formé par l'"adduct" provenant de l'étape (1) et ledit halogénure d'hydrocarbyle, et une proportion de soufre élémentaire pouvant aller jusqu'à 7 atomes-gramme par mole du composé sulfuré mis en jeu.

Le procédé permet alors d'obtenir, notamment pour les rapports atomes-gramme de soufre élémentaire/moles de composé sulfuré les plus élévés (par exemple d'environ 3,3/1 à 7/1), des produits très riches en soufre (allant jusqu'à environ 60-65 % en masse) et de solubilité encore accrue dans les huiles destinées au travail des métaux (par exemple du type 100 Neutral Solvent ou Spindle naphténique).

Les deux documents ci-dessus ont été regroupés notamment dans la demande de brevet européen EP-A 0 159 936.

On a maintenant découvert qu'il était possible de préparer de nouvelles compositions d'oléfines polysulfurées utilisables avantageusement comme additifs pour lubrifiants.

Les compositions d'oléfines polysulfurées de l'invention pouvant être définies d'une manière générale comme dans le brevet FR-B-2 563 231 et dans la demande de certificat d'addition FR-A-2 571 380 précités, à la différence près que dans la deuxième étape de leur préparation, conjointement au produit d'addition (ou "adduct") issu de la première étape, on met en jeu au moins un monohalogènure, d'hydrocarbényle, ou composé hydrocarboné monohalogéné insaturé.

Ainsi, les compositions de l'invention sont définies comme étant obtenues par un procédé qui comprend :
- une étape (1), dans laquelle on fait réagir, par exemple à une température de 20 à 80°C, au moins un composé choisi parmi le monochlorure et le dichlorure de soufre avec au moins une monooléfine aliphatique de 2 à 5 atomes de carbone, formant ainsi un produit d'addition (ou "adduct") ;
- une étape (2), dans laquelle on met en contact ledit "adduct" et au moins un composé hydrocarboné insaturé monohalogéné qui sera défini plus loin, avec au moins un composé sulfuré choisi parmi les sulfures, les hydrogénosulfures et les polysulfures de métaux alcalins, d'ammonium ou de métaux alcalino-terreux et le plus souvent, du soufre élémentaire, au sein d'un mileu aqueux ou hydroalcoolique, maintenu par exemple à une température de 20 à 100°C pendant l'introduction des divers réactifs ;
- une étape (3) dans laquelle on chauffe le mélange résultant à une température allant par exemple de 50°C à la température de reflux, on laisse décanter, on élimine la phase aqueuse inférieure et on récupère l'oléfine polysulfurée dans la phase organique supérieure ; et
- éventuellement une étape (4) dans laquelle on traite le produit obtenu par un composé basique, tel qu'une base minérale.

Les oléfines de départ peuvent renfermer de 2 à 5 atomes de carbone, et être utilisées seules ou en mélanges. On utilise le plus souvent l'isobutène. On peut aussi prévoir d'utiliser ces oléfines en mélange avec des proportions mineures d'oléfines de plus de 5 atomes de carbone (par exemple du diisobutène).

L'oléfine peut être utilisée en une proportion de 1,5 à 2,5 moles, de préférence de 1,8 à 2,2 moles, par mole de monochlorure et/ou de dichlorure de soufre. Elle est en général introduite dans le monochlorure et/ou le chlorure de soufre liquide à une température de 20 à 80°C, plus spécifiquement de 20 à 50°C.

Dans l'étape (2) du procédé, le composé hydrocarboné insaturé monohalogéné utilisé conjointement à l'"adduct" obtenu à l'issue de l'étape (1) peut consister en un chlorure, un bromure ou un iodure d'alkényle linéaire ou ramifié, en $C_2$ à $C_{12}$ (de préférence en $C_2$ à $C_4$), de cycloalkényle, éventuellement alkyl-substitué, en $C_5$ à $C_{12}$ (de préférence en $C_6$), ou d'arylalkényle, éventuellement alkyl-substitué sur le radical aryle, en $C_6$ à $C_{12}$ (de préférence en $C_8$ et $C_9$).

Il peut également consister en un hydrocarbure aliphatique ou cyclique insaturé, monohalogéné, comportant dans sa chaîne ou dans son cycle au moins un hétéroatome tel que le soufre, l'oxygène ou l'azote. Pour des raisons opératoires, on considère comme particulièrement avantageux les composés hydrocarbonés insaturés monohalogénés dont le point d'ébullition va par exemple jusqu'à environ 100 -150°C.

On peut citer comme exemples notamment le chloro-1 éthylène, le chloro-1 propène, le chloro-2 propène, le chloro-3 propène, le chloro-1 butène-1, le chloro-1 butène-2, le chloro-2 butène-2, le chloro-3 butène-1, le chloro-1 méthyl-2 propène, le chloro-3 méthyl-2 propène, ou encore le chloro-3 phényl-1 propè-

3

ne-1. On peut encore citer le chloro-2 thiophène.

La proportion de composé hydrocarboné insaturé monohalogéné utilisée doit être suffisante pour que l'on observe une amélioraion marquée des propriétés du produit final. Elle est en général de 1 à 70 % en atomes-gamme d'halogène par rapport au nombre total d'atomes-gramme d'halogène de l'ensemble "adduct" + composé monohalogéné. Cette proportion correspond en général à un nombre de moles de composé monohalogéné d'environ 0,015 à 1,9 pour 100 g d'"adduct", en particulier lorsque la monooléfine de départ est l'isobutène.

Dans le cadre de l'invention, il est possible de remplacer une partie allant par exemple jusqu'à 90 % en moles, et plus particulièrement jusqu'à 50 % en moles du composé hydrocarboné insaturé monohalogéné tel que défini plus haut par une quantité molaire équivalente d'au moins un composé hydrocarboné monohalogéné saturé et/ou d'au moins un composé hydrocarboné monohalogéné portant en outre au moins un groupement fonctionnel comportant un ou plusieurs hétéroatomes (tels que l'oxygène et/ou l'azote et/ou le soufre) , tels que définis ci-après.

Les composés hydrocarbonés saturés monohalogénés peuvent consister en des chlorures, bromures ou iodures d'alkyles, linéaires ou ramifiés, (par exemple $C_1$ à $C_8$), de cycloalkyles, éventuellement alkyl- substitués, (par exemple en $C_6$), ou d'arylalkyles, éventuellement alkyl-substitués sur le radical aryle, (par exemple en $C_7$ et $C_8$).

On peut citer comme exemples notamment les chlorures, bromures et iodures de méthyle, d'éthyle, d'isopropyle, de n-propyle, de tert-butyle, d'isobutyle, de n-butyle, de tert-amyle, d'isoamyle, de n-amyle, de n-hexyle, d'éthyl-2 hexyle, de n-octyle, de cyclohexyle et de benzyle et leurs mélanges. On utilise avantageusement le chlorure d'isopropyle, le chlorure et le bromure de n-butyle, le chlorure de n-octyle, le chlorure de cyclohexyle ou le chlorure de benzyle.

Les composés hydrocarbonés monohalogénés fonctionnels peuvent consister principalement en des composés monochlorés ou monobromés ; ils seront avantageusement choisis parmi

. les composés monohalogénés renfermant au moins une fonction alcool et notamment :
- des halogénures de monoalcools aliphatiques, alicycliques ou aromatiques-aliphatiques renfermant par exemple de 2 à 18 atomes de carbone,
- des halogénures de polyols (et les dérivés époxy correspondants)et
- des halogénures de monoalcools (poly-) oxyalkylénés ;
. les composés monohalogénés renfermant au moins une fonction phénol ;
. les composés monohalogénés renfermant au moins une fonction carboxylique ;
. les composés monohalogénés renfermant au moins une fonction amine, notamment des composés aliphatiques, alicycliques ou aromatiques-aliphatiques ;
. les composés monohalogénés renfermant au moins une fonction amide ;
ou encore
. les composés monohalogénés renfermant au moins une fonction thiol.

Parmi les composés monohalogénés fonctionnels présentant des groupements de plusieurs types différents, on peut citer :
. des composés à fonctions hydroxyle et acide carboxylique ;
. des composés à fonctions amine et acide carboxylique ; ou encore
. des composés à fonctions hydroxyle et amine.

Des exemples plus spécifiques de tels composés sont donnés dans la demande de brevet européen EP-A-0 159 936 au nom du même déposant.

Le composé sulfuré utilisé dans l'étape (2) peut être choisi parmi les sulfures, les hydrogénosulfures et les polysulfures de métaux alcalins (par exemple sodium ou potassium), de métaux alcalino-terreux (par exemple magnésium ou calcium) ou d'ammonium. On utilise le plus souvent le sulfure de sodium, l'hydrogé- nosulfure de sodium (par exemple en présence de soude) et les polysulfures de sodium. Ce composé est mis en jeu en une proportion d'environ 0,4 à 0,8 mole par atome-gramme d'halogène contenu dans l'ensemble "adduct" + hydrocarbure monohalogéné.

Le soufre élémentaire éventuellement mis en jeu dans l'étape (2), conjointement au composé sulfuré, peut être avec celui-ci dans un rapport molaire allant jusqu'à environ 7/1 (plus particulièrement de 0.4/1 à 7/1), ce qui correspond à un rapport inverse qui peut être aussi faible qu'environ 0.14/1 (plus particulièrement de 0.14/1 à 2,5/1).

Dans l'étape (2), on introduit (ou on forme) en général le composé sulfuré et on introduit le soufre élémentaire éventuel dans de l'eau ou, de préférence, dans un mélange d'eau et de monoalcool aliphatique léger (renfermant par exemple de 1 à 4 atomes de carbone).

Comme monoalcools aliphatiques légers, on peut citer : le méthanol, l'éthanol, le n-propanol, l'isopropa- nol, le n-butanol, l'isobutanol et le tert-butanol, l'isopropanol étant préféré. Le mélange eau-alcool utilisé peut contenir par exemple de 2 à 60 % en masse d'alcool (de préférence de 5 à 45 %) par rapport à la masse d'eau.

Dans le milieu ainsi constitué, maintenu sous agitation (à 20-100°C), on ajoute conjointement le produit d'addition issu de l'étape (1) et l'hydrocarbure monohalogéné en un temps de quelques minutes à plusieurs heures, par exemple de 10 minutes à 3 heures.

Dans l'étape (3), on chauffe (à une température allant de 50°C à la température de reflux) par exemple pendant 3 à 24 heures.

On peut éventuellement mettre en oeuvre une étape (4) de traitement du produit obtenu à l'issue de l'étape (3) au moyen d'un composé basique, qui peut être par exemple une base minérale (telle que la soude ou la potasse) en solution aqueuse. Les solutions aqueuses utilisées peuvent avoir par exemple des concentrations en soude ou en potasse d'environ 0,5 à 20 % en masse.

La réaction de l'étape (2) du procédé de l'invention et les traitements ultérieurs peuvent être effectués en continu. Les opérations se font alors de préférence selon un processus d'alimentation des réactifs en courant parallèles et à contacts multiples (plutôt qu'à contre-courant), ce qui est favorable quant aux propriétés des produits finalement obtenus.

Les compositions de l'invention, telles que définies ci-dessus consistent en des mélanges d'oléfines polysulfurées présentant en général une teneur en soufre d'environ 40 à 65 % en masse. Leur viscosité cinématique à 100°C, variable en fonction de la teneur en soufre, peut aller d'environ 4 à 20 mm$^2$/s. Leur teneur en halogène (principalement en chlore) est en général inférieure à environ 1 % en masse et le plus souvent inférieure à environ 0,6 % en masse.

Ces produits sont en général solubles dans les huiles minérales et la plupart des huiles d'origine synthétique, à des concentrations substantielles, pour certains même en toutes proportions. Les produits qui présentent les teneurs en soufre les plus élevées peuvent avoir une solubilité plus limitée dans les huiles lubrifiantes, cette solubilité étant cependant suffisante pour certaines des applications auxquelles ils peuvent être destinés (additifs pour huiles de travail des métaux comme indiqué plus loin).

Les produits de l'invention sont particulièrement utiles pour la formulation d'huiles destinées à la lubrification des engrenages.

Les huiles de base peuvent être d'origine minérale ou synthétique. Les huiles synthétiques incluent notamment les oligomères d'oléfines tels que les tri- tétra- et pentamères du décène-1 obtenus par oligomérisation en présence d'acides de LEWIS. D'autres $\alpha$-oléfines peuvent bien sûr être employées, par exemple les $\alpha$-oléfines en $C_6$ à $C_{14}$.

On peut encore utiliser des alkylbenzènes, tels que les mono-et dialkylbenzènes, ou encore les esters synthétiques provenant d'acides mono- ou polycarboxyliques (tels que l'acide sébacique, les acides gras, etc.) et de monoalcools ou de polyols, (tels que l'éthyl-2 hexanol, le triméthylolpropane, etc.).

Dans cette application, on peut utiliser des oléfines polysulfurées dont la préparation met en jeu aussi bien des proportions de soufre relativement faibles (rapports molaires soufre élémentaire/composé soufré par exemple de 0,4 à 0,55/1) que des proportions de soufre plus élevées. Pour des raisons de solubilité dans le lubrifiant choisi et de corrosivité de l'additif, la valeur du rapport molaire soufre élémentaire/composé soufré pourra aller jusqu'à environ 2,5/1, pour les additifs utilisables dans les huiles minérales, et jusqu'à environ 0,7/1, pour les additifs utilisables dans les huiles synthétiques.

Ces oléfines polysulfurées ont en général une teneur en soufre de 40 à 50 % en masse.

Les oléfines polysulfurées considérées peuvent alors être ajoutées aux huiles lubrifiantes à des concentrations allant par exemple de 0.5 à 7 % en masse.

Ces additifs peuvent être utilisés en combinaison avec des additifs phosphorés, tels que les dialkyl- ou diaryldithiophosphates métalliques, les phosphites et les phosphates organiques.

D'autres additifs classiques peuvent être ajoutés, tels que des antioxydants, des antirouille, des passivateurs de cuivre, des antimousses, des réducteurs de frottement, dans des proportions usuelles.

Les produits de l'invention peuvent en outre être avantageusement utilisés pour la formulation d'huiles destinées au travail des métaux (coupe, formage, etc).

Dans cette application, outre les oléfines polysulfurées dont la préparation met en jeu des proportions de soufre correspondant à des rapports molaires soufre élémentaire/composés soufrés allant jusqu'à 2,5/1 (comme indiqué plus haut dans le cas des huiles pour engrenages), on peut encore utiliser des oléfines polysulfurées dont la préparation met en jeu un rapport molaire soufre élémentaire/composé soufré encore plus élevé allant jusqu'à environ 7/1, ces produits, dont la teneur en soufre, en général d'au moins 50 %, peut aller jusqu'à 60-65 % en masse, étant de façon surprenante encore suffisamment solubles dans les huiles de base d'origine minérale servant à la formulation des lubrifiants pour le travail des métaux (par exemple 100 Neutral Solvent).

Dans ce cas, la concentration d'additif utilisé est en général de l'ordre de 0,1 à 10 % en masse, et de préférence de 0,5 à 5 % en masse par rapport à l'huile lubrifiante. Dans cette application, d'autres additifs classiques peuvent être ajoutés, tels que des paraffines chlorées en une proportion correspondant par exemple à 2-10 % en masse de chlore par rapport à l'huile lubrifiante.

Les exemples suivants illustrent l'invention ; ils ne doivent en aucune manière être considérés comme limitatifs. L'exemple 1 est donné à titre de comparaison.

## EXEMPLE 1 (comparatif)

Dans un réacteur de 5 l chauffé à 40-45°C, on introduit 1900 g de monochlorure de soufre $S_2Cl_2$ (14,07 moles), puis, par l'intermédiaire d'un tube plongeant, on introduit sous la surface du $S_2Cl_2$, constamment agité, 1780 g d'isobutène (34,27 moles), dans lequel on a dissous 17,8 g de méthanol. La température du milieu réactionnel est maintenue entre 45 et 50°C durant toute la durée d'introduction de l'isobutène (3 heures). On obtient ainsi 3520 g de produit d'addition, que l'on désigne par le terme d'"'adduct".

Dans un second réacteur de 1 l en acier inoxydable de type GRIGNARD pouvant supporter la pression, on introduit successivement 296 g d'eau, 159,3 g de Na$_2$S à 60 % en écailles (1,225 mole), 19,5 g de soufre finement divisé (0,609 atome-g) et 31 cm$^3$ d'isopropanol ; le rapport molaire Na$_2$S/S utilisé dans l'essai est égal à 2. Le mélange est chauffé à 80°C sous agitation pendant une heure, puis la température est ramenée à 45°C.

A l'aide d'une pompe doseuse, on introduit ensuite dans le milieu aqueux constamment agité 250 g de produit d'addition obtenu précédemment, l'introduction étant effectuée en 0,75 heure. La température du milieu réactionnel s'élève progressivement de 45 à 75°C ; on chauffe ensuite le mélange à 105°C pendant 15 heures sous vigoureuse agitation.

On laisse refroidir vers 80°C, on arrête l'agitation, on laisse décanter 0,5 heure, on élimine la phase aqueuse inférieure, puis on ajoute à la phase organique 200 cm$^3$ d'une solution aqueuse de soude à 10 % en masse. Le mélange est porté de nouveau à 105°C pendant 6 heures.

La phase organique récupérée après décantation est lavée trois fois avec 200 cm$^3$ d'eau ; elle est séchée sous un vide de 2666 Pa à 100°C pendant 1 heure, puis filtrée en présence de terre de diatomées. On obtient ainsi 187 g d'un liquide jaune-orangé dont les caractéristiques sont les suivantes :
S (% masse) = 47,6
Cl (% masse) = 0,45
Viscosité à 100°C (mm$^2$/s) = 11,9

### EXEMPLE 2

En opérant dans des conditions opératoires rigoureusement identiques à celles de l'exemple 1, on introduit dans la solution de polysulfure alcalin à l'aide de la pompe doseuse, un mélange constitué de 200 g de produit d'addition S$_2$Cl$_2$/isobutène et de 25,31 g de chloroéthylène (chlorure de vinyle), soit 0,405 mole. Après traitements, on récupère 172 g d'un produit jaune orangé fluide dont les caractéristiques sont les suivantes :
S (% masse ) = 45,8
Cl (% masse) = 0,54
Viscosité à 100°C (mm$^2$/s) = 6,8

### EXEMPLES 3 à 7

Comme dans l'exemple 2, on introduit dans la solution de polysulfure alcalin des mélanges constitués de 200 g de produit d'addition S$_2$Cl$_2$/isobutène et de 0,405 mole de divers chlorures d'hydrocarbényles :

EXEMPLE 3 : Chloro-3 propène (chlorure d'allyle) : 31 g
EXEMPLE 4 : Chloro-3 butène-1 : 36,65 g
EXEMPLE 5 : Chloro-1 butène-2 (chlorure de crotyle) : 36,65 g
EXEMPLE 6 : Chloro-3 méthyl-2 propène (chlorure de méthallyle) : 36,65g
EXEMPLE 7 : Chloro-3 phényl-1 (chlorure de cinnamyle) : 61,8g

Les caractéristiques des produits obtenus sont rassemblées dans le Tableau I ci-après.

6

Tableau I

| Conditions opératoires: Durée introduction du mélange halogénure d'hydrocarbényle/adduct: 0,75 heure $Na_2S/S$ = 2/1 molaire |||||||||
|---|---|---|---|---|---|---|---|---|
| Ex-emple | «Ad-duct» | Halogénure d'hydrocarbényle employé | | Masse de produit (g) | Caractéristiques des produits |||
| | | Nature | Quan-tité (g) | | Viscosité 100°C (mm$^2$/s) | S (% masse) | Cl (% masse) | Solubilité** à 5% masse dans PAO* à 20°C |
| 1 (Comp.) | 250 | néant | — | 187 | 11,9 | 47,6 | 0,45 | insol |
| 2 | 200 | Chlorure de vinyle | 25,31 | 172 | 6,8 | 45,8 | 0,54 | sol |
| 3 | 200 | Chlorure d'allyle | 31,00 | 178 | 6,5 | 46,8 | 0,42 | sol |
| 4 | 200 | Chloro-3 butène-1 | 36,65 | 182 | 5,2 | 45,9 | 0,48 | sol |
| 5 | 200 | Chlorure de crotyle | 36,65 | 184 | 5,4 | 46,2 | 0,51 | sol |
| 6 | 200 | Chlorure de méthallyle | 36,65 | 183 | 5,4 | 46,4 | 0,50 | sol |
| 7 | 200 | Chlorure de cinnamyle | 61,8 | 197 | 5,8 | 40,4 | 0,39 | sol |

\* PAO: mélange de polyalphaoléfines hydrogénées (SAE 90)

\*\* Les additifs qui ne se révèlent que partiellement solubles (apparition d'une turbidité) sont déclarés insolubles.

## EXEMPLE 8

L'expérimentation de l'exemple 1 est reprise en utilisant un mélange constitué par 200 g de produit d'addition $S_2Cl_2$/isobutène et de 48 g de chloro-2 thiophène (0,405 mole). Après traitement, on récupère 187 g d'un produit jaune-orangé fluide dont les caractéristiques sont les suivantes :
S (% masse) = 47,5
Cl (% masse) = 0,55
Viscosité à 100°C (mm2/s) = 6,1
Solubilité à 20°C dans PAO (SAE 90) = soluble

## EXEMPLE 9

L'expérimentation de l'exemple 1 est reprise en mettant en oeuvre 159,3 g de $Na_2S$ à 60% en écailles (1,225 mole), 196 g de soufre finement divisé (6,115 atomes-gramme), 31 cm3 d'isopropanol (le rapport molaire $Na_2S/S$ utilisé dans cet essai est de 0.2), et un mélange constitué de 93,65 g de produit d'addition $S_2Cl_2$/isobutène et de 114,3 g de chlorure de crotyle (1,263 mole). Après réaction à 105°C, décantation et élimination de la phase aqueuse, la phase organique est traitée sous agitation vigoureuse pendant 6 heures à 105°C avec 200 cm3 d'une solution aqueuse de soude à 4 % en masse.

La phase organique récupérée après décantation est lavée trois fois avec 200 cm3 d'eau ; elle est séchée sous un vide de 2666 Pa à 100°C pendant 1 heure, puis filtrée en présence de terre de diatomées. On obtient ainsi 274 g d'un liquide jaune-orangé fluide dont les caractéristiques sont les suivantes :
S (% masse) = 64,2
Cl (% masse) = 0,25
Viscosité à 100°C (mm2/s) = 5,6

## EXEMPLE 10

La corrosivité vis à vis du cuivre des additifs de l'invention est évaluée à partir d'essais de corrosion sur lame de cuivre selon la norme ASTM D 130 (NF M 07-015) à partir d'une huile minérale SAE 90 contenant 5 % en masse d'additif soufré.

Les résultats obtenus sont rassemblés dans le tableau II ils sont exprimés par une cotation comprenant un nombre (de 1 à 4), ce nombre étant suivi d'une lettre précisant la nuance de la corrosion de la lame de cuivre.

Tableau II

| Additif de l'exemple | S dans l'additif (% masse) | 3 heures à 121°C |
|---|---|---|
| 2 | 45,8 | 2 a |
| 3 | 46,8 | 2 b |
| 4 | 45,9 | 2 a |
| 5 | 46,2 | 2 b |
| 6 | 46,4 | 2 a |
| 7 | 40,4 | 2 a |
| 8 | 47,5 | 2 b |
| 9* | 64,2 | 4 c** |

\* Solution huileuse ne contenant que 1% d'additif de l'exemple
\*\* Résultat identique à 100°C.

Les produits conduisant à une cotation inférieure ou égale à 3, c'est-à-dire les produits des exemples 2 à 8 peuvent être utilisés plus particulièrement pour la formulation d'huiles d'engrenages. Ceux qui conduisent à une cotation de corrosion plus élevée - c'est le cas du produit de l'exemple 9 - seront utilisés plus particulièrement pour la formulation d'huiles pour le travail des métaux.

EXEMPLES 11 et 12. Evaluation des propriétés extrême-pression d'additifs selon l'invention.

On a réalisé des essais mettant en évidence les propriétés extrême-pression de certains des additifs préparés dans les exemples précédents, d'une part dans des formulations du type huiles d'engrenages et, d'autre part, dans des formulations du type huiles de travail des métaux.

EXEMPLE 11

Dans une première série d'essais, les produits des exemples 2, 4, 5, 6 et 7 ont été étudiés à l'aide d'une machine 4 billes selon les précédures de l'ASTM D 2266 et D 2783, à la concentration de 1,5 % en masse dans une huile minérale SAE 90 ; les résultats obtenus sont rassemblés dans le tableau III.

Tableau III

| Additif de l'exemple | Indice Charge/usure | Charge de soudure (kg) | Ø d'empreinte des billes 1 h sous 40 kg (mm) |
|---|---|---|---|
| sans | 21,8 | 60 | 0,85 |
| 2 | 63,2 | 400 | 0,65 |
| 4 | 63,8 | 400 | 0,66 |
| 5 | 65,2 | 400 | 0,67 |
| 6 | 64,7 | 400 | 0,66 |
| 7 | 64,3 | 400 | 0,66 |

Ces résultats montrent que les additifs selon l'invention conduisent à une augmentation très sensible de l'indice charge-usure, de la charge de soudure des billes et réduisent de façon importante l'usure des billes ; compte tenu de leur faible corrosivité, ces additifs peuvent être avantageusement utilisés pour la formulation d'huiles extrême-pression pour engrenages industriels ou d'automobiles.

EXEMPLE 12

Dans une seconde série d'expérimentations, les propriétés extrême-pression de l'additif obtenu dans l'exemple 9 sont évaluées à partir d'une formulation du type huile de coupe des métaux, au moyen d'une machine 4 billes selon la procédure ASTM D 2783.
La formulation lubrifiante étudiée est constituée d'une huile minérale 100 Neutral Solvent renfermant 3 % de chlore sous forme de paraffine chlorée, et 1 % de soufre sous forme d'additif soufré de l'exemple 9. Les résultats obtenus sont rassemblés dans le tableau IV ci-après.

Ces résultats montrent que l'additif à très haute teneur en soufre selon l'invention, conduit à une augmentation considérable de la charge de soudure des billes ; on peut à ce titre le recommander pour l'élaboration d'huiles de coupe des métaux.

Tableau IV

| Paraffine Chlorée (% masse) | Additif de l'exemple | S % masse de l'additif soufré | % masse de l'additif dans l'huile 1000 N.S. | Solubilité dans l'huile 100 N.S. | | Essais 4 billes E.P. | | |
|---|---|---|---|---|---|---|---|---|
| | | | | 20°C | 0°C | Indice Charge/ usure | Charge avant grip- page (kgf) | Charge de soudure (kgf) |
| sans | sans | — | — | — | — | 21,7 | 50 | 126 |
| 4,62 | sans | — | — | limpide | limpide | 39,2 | 80 | 200 |
| sans | 9 | 64,2 | 1,56 | limpide | louche | 43,7 | 80 | 315 |
| 4,62 | 9 | 64,2 | 1,56 | limpide | limpide | 102,0 | 100 | 620 |

## Revendications

1. Composition d'oléfine polysulfurée, caractérisée en ce qu'elle est obtenue par un procédé qui comprend une étape (1) dans laquelle on fait réagir au moins un composé choisi parmi le monochlorure et le dichlorure de soufre avec au moins une monooléfine de 2 à 5 atomes de carbone, en une proportion de 1,5 à 2,5 moles de monooléfine par mole de monochlorure et/ou de dichlorure de soufre, formant ainsi un produit d'addition ou "adduct" ; une étape (2) dans laquelle on met en contact ledit "adduct" et au moins un composé hydrocarboné monohalogéné insaturé, la proportion dudit composé hydrocarboné monohalogéné insaturé correspondant à 1 - 70 % en atomes-gramme d'halogène par rapport au nombre d'atomesgramme d'halogène de l'ensemble formé par ledit "adduct" et ledit composé hydrocarboné monohalogéné insaturé, avec au moins un composé sulfuré choisi parmi les sulfures, les hydrogénosulfures et les polysulfures de métaux alcalins, d'ammonium ou de métaux alcalino-terreux, mis en jeu en une proportion d'environ 0,4 à 0,8 mole par atome-gramme d'halogène contenu dans l'ensemble formé par ledit "adduct" et ledit composé hydrocarbone monohalogéné insaturé, et une proportion de soufre élémentaire de 0 à 7 atomes-gramme par mole dudit composé sulfuré, au sein d'un milieu consistant en de l'eau ou un mélange d'eau et de monoalcool aliphatique ; et une étape (3) dans laquelle on chauffe le mélange résultant et, après séparation en deux phases, on récupère l'oléfine polysulfurée dans la phase organique.

2. Composition selon la revendication 1, caractérisée en ce que ledit composé hydrocarboné monohalogéné insaturé considéré dans l'étape (2) consiste en un chlorure, en bromure ou un iodure d'alkényle, linéaire ou ramifié , de $C_2$ à $C_{12}$, de cycloalkényle ou de cycloalkényle substitué de $C_5$ à $C_{12}$, d'arylalkényle ou d'arylalkényle substitué de $C_6$ à $C_{12}$ ou en un hydrocarbure aliphatique ou cyclique monohalogéné comportant dans sa chaîne ou dans son cycle un hétéroatome choisi parmi le soufre, l'oxygène ou l'azote.

3. Composition selon l'une des revendications 1 et 2, caractérisée en ce que ledit composé hydrocarboné monohalogéné insaturé est choisi parmi le chloro-1 éthylène, le chloro-1 propène, le chloro-2 propène, le chloro-3 propène, le chloro-1 butène-1, le chloro-1 butène-2, le chloro-2 butène-2, le chloro-3 butène-1, le chloro-1 méthyl-2 propène, le chloro-3 métyl-2 propène, le chloro-3 phényl-1 propène-1 et le chloro-2 thiophène.

4. Composition selon l'une des revendications 1 à 3, caractérisée en ce que ledit composé sulfuré est choisi parmi le sulfure de sodium, l'hydrogénosulfure de sodium, et les polysulfures de sodium.

5. Composition selon l'une revendications 1 à 4, caractérisée en ce que la proportion de soufre élémentaire est de 0,4/1 à 7/1 atomes-gramme par mole de composé sulfuré.

6. Composition selon l'une des revendications 1 à 5, caractérisée en ce que, dans l'étape (2), ledit "adduct" et ledit composé hydrocarboné monohalogéné sont ajoutés au milieu contenant ledit composé sulfuré et éventuellement le soufre élémentaire, maintenu à une température de 20 à 100°C, en l'espace de 10 minutes à 3 heures et en ce que, dans l'étape (3), on chauffe à une température allant de 50°C jusqu'au reflux, pendant 3 à 24 heures.

7. Composition selon l'une des revendications 1 à 6, caractérisée en ce qu'il comprend en outre une étape (4) dans laquelle le produit issu de l'étape (3) est traité par un composé basique.

8. Composition selon l'une des revendications 1 à 8, caractérisée en ce que, à partir de l'étape (2), les opérations sont effectuées en continu, les réactifs mis en jeu dans les étapes (2) étant mis en contact en courants parallèles et selon un processus à contacts multiples.

9. Composition selon l'une des revendications 1 à 8, caractérisée en ce qu'une partie, allant jusqu'à environ 90 % en moles, du composé hydrocarboné monohalogéné insaturé mis en jeu dans l'étape (2) est remplacée par une quantité molaire équivalente d'au moins un composé hydrocarboné monohalogéné saturé et/ou d'au moins un composé hydrocarboné monohalogéné portant au moins un groupement fonctionnel choisi parmi les fonctions alcools, phénols, acides carboxyliques, amines, amides et thiols.

10. Huile d'engrenages, caractérisée en ce qu'elle comprend une proportion majeure d'huile lubrifiante minérale ou synthétique et, à titre d'additif , de 0,5 à 7% en masse d'au moins une composition d'oléfine polysulfurée selon l'une des revendications 1 à 9.

11. Huile pour le travail des métaux, caractérisée en ce qu'elle comprend une proportion majeure d'huile lubrifiante minérale et, à titre d'additif, de 0,1 à 10% en masse d'au moins une composition d'oléfine polysulfurée selon l'une des revendications 1 à 9.

## Patentansprüche

1. Polysulfurierte Olefinzusammensetzung, dadurch gekennzeichnet, daß sie erhalten ist durch ein Verfahren, das eine Stufe (1) umfaßt, worin man zumindest eine Verbindung aus der Gruppe Schwefelmonochlorid und Schwefeldichlorid mit zumindest einem Monoolefin mit 2 bis 5 Kohlenstoffatomen in einem Mengenanteil von 1,5 bis 2,5 Mol Monoolefin pro Mol Schwefelmonochlorid und/oder -dichlorid reagieren läßt und so ein Additionsprodukt oder "Addukt" bildet; sowie eine Stufe (2), worin man dieses "Addukt" und zumindest eine ungesättigte monohalogenierte Kohlenwasserstoffverbindung, wobei der Mengenanteil dieser ungesättigten monohalogenierten Kohlenwasserstoffverbindung 1 bis 70% in Grammatom Halogen bezogen auf Anzahl Grammatom Halogen des durch das "Addukt" und die ungesättigte monohalogenierte Kohlenwasserstoffverbindung gebildete Einheit entspricht, mit zumindest einer schwefelhaltigen Verbindung aus der Gruppe der Sulfide, Hydrogensulfide und Polysulfide der Alkalimetalle, des Ammoniums oder der Erdalkalimetalle in Kontakt bringt, wobei man einen Mengenanteil von etwa 0,4 bis 0,8 Mol pro Grammatom an Halogen, das in der aus dem "Addukt" und der ungesättigten monohalogenierten Kohlenwasserstoffverbindung gebildeten Einheit enthalten ist, und einen Mengenanteil an elementarem Schwefel von 0 bis 7 Grammatom pro Mol dieser schwefelhaltigen Verbindung einsetzt, wobei man in einem aus Wasser oder einem Gemisch von Wasser und aliphatischem Monoalkohol bestehenden Medium arbeitet, sowie eine Stufe (3), worin man das erhaltene Gemisch erhitzt und nach Trennung in zwei Phasen das polysulfurierte Olefin in der organischen Phase gewinnt.

2. Zusammensetzung nach Anspruch 1, dadurch gekennzeichnet, daß die in der Stufe (2) eingesetzte ungesättigte monohalogenierte Kohlenwasserstoffverbindung aus einem Chlorid, Bromid oder Jodid eines linearen oder verzweigten Alkens mit 2 bis 12 Kohlenstoffatomen, eines Cycloalkens oder eines substituierten Cycloalkens mit 5 bis 12 Kohlenstoffatomen, eines Arylalkens oder substituierten Arylalkens mit 6 bis 12 Kohlenstoffatomen oder aus einem monohalogenierten aliphatischen oder cyclischen Kohlenwasserstoff, der in seiner Kette oder in seinem Ring ein Heteroatom aus der Gruppe Schwefel, Sauerstoff oder Stickstoff trägt, besteht.

3. Zusammensetzung nach einem der Ansprüche 1 oder 2, dadurch gekennzeichnet, daß die ungesättigte monohalogenierte Kohlenwasserstoffverbindung ausgewählt ist aus 1-Chlorethylen, 1-Chlorpropen, 2-Chlorpropen, 3-Chlorpropen, 1-Chlorbuten-1, 1-Chlorbuten-2, 2-Chlorbuten-2, 3-Chlorbuten-1, 1-Chlor-2-methylpropen, 3-Chlor-2-methylpropen, 3-Chlor-1-phenylpropen-1 und 2-Chlortiophen.

4. Zusammensetzung nach einem der Ansprüche 1 bis 3, dadurch gekennzeichnet, daß die schwefelhaltige Verbindung aus der Gruppe Natriumsulfid, Natriumhydrogensulfid und Natriumpolysulfid gewählt ist.

5. Zusammensetzung nach einem der Ansprüche 1 bis 4, dadurch gekennzeichnet, daß der Mengenanteil an elementarem Schwefel 0,4 zu 1 bis 7 zu 1 Grammatom pro Mol schwefelhaltiger Verbindung beträgt.

6. Zusammensetzung nach einem der Ansprüche 1 bis 5, dadurch gekennzeichnet, daß in der Stufe (2) das "Addukt" und die monohalogenierte Kohlenwasserstoffverbindung einem Medium zugesetzt werden, das diese schwefelhaltige Verbindung und ggfs. elementaren Schwefel enthält und auf einer Temperatur von 20 bis 100°C gehalten wird und zwar innerhalb einer Zeitspanne von 10 min bis 3 h und daß man in Stufe (3) auf eine Temperatur von 50°C bis zum Rückfluß während 3 bis 24 h erhitzt.

7. Zusammensetzung nach einem der Ansprüche 1 bis 6, dadurch gekennzeichnet, daß man außerdem eine Stufe (4) anwendet, in welcher das in der Stufe (3) entstandene Produkt mit einer basischen Verbindung behandelt wird.

8. Zusammensetzung nach einem der Ansprüche 1 bis 7, dadurch gekennzeichnet, daß man ab der Stufe (2) die Arbeitsgänge kontinuierlich durchführt, wobei die in der Stufe (2) eingesetzten Reaktionsteilnehmer in parallelen Strömen und nach einer Arbeitsweise der mehrfachen Kontakte in Kontakt gebracht werden.

9. Zusammensetzung nach einem der Ansprüche 1 bis 8, dadurch gekennzeichnet, daß man einen Teil, der bis zu etwa 90 Mol-% gehen kann, der ungesättigten monohalogenierten Kohlenwasserstoffverbindung, die in Stufe (2) eingesetzt wird, durch eine äquivalente molare Menge zumindest einer gesättigten monohalogenierten Kohlenwasserstoffverbindung und/oder zumindest einer monohalogenierten Kohlenwasserstoffverbindung, die zumindest eine funktionelle Gruppe aus den Funktionen Alkohole, Phenole, Carbonsäuren, Amine, Amide und Thiole aufweist, ersetzt.

10. Getriebeöl, dadurch gekennzeichnet, daß es einen größeren Anteil an mineralischem oder synthetischem Schmieröl und als Zusatz 0,5 bis 7 Masse-% von zumindest einer Zusammensetzung des polysulfurierten Olefins nach einem der Ansprüche 1 bis 9 umfaßt.

11. Öl für die Metallbearbeitung, dadurch gekennzeichnet, daß es einen größeren Anteil an mineralischem Schmieröl und als Zusatz 0,1 bis 10 Masse-% von zumindest einer Zusammensetzung des polysulfurierten Olefins nach einem der Ansprüche 1 bis 9 umfaßt.

**Claims**

1. A polysulfided olefin composition, characterized in that it is obtained by a process comprising the steps of: (1) reacting at least one compound selected from sulfur monochloride and sulfur dichloride with at least one monoolefin having 2 to 5 carbon atoms, in a proportion of 1.5 to 2.5 mole of monoolefin per mole of sulfur monochloride and/or sulfur dichloride, thus forming an addition product or "adduct", (2) contacting said "adduct" and at least one unsaturated monohalogenated hydrocarbon compound, the proportion of said unsaturated monohalogenated hydrocarbon compound corresponding to 1–70% of halogen gram-atoms in proportion to the total number of halogen gram-atoms of the assembly formed by said "adduct" and said unsaturated monohalogenated hydrocarbon compound, with at least one sulfur compound selected from sulfides, halogenosulfides and polysulfides of alkali metals, ammonium or alkaline-earth metals, used in a proportion of about 0.4 to 0.8 mole per halogen gram-atom contained in the assembly formed by said "adduct" and said unsaturated monohalogenated hydrocarbon, and a proportion of element sulfur from 0 to 7 gram-atoms per mole of said sulfur compound, within a mixture consisting of water or a mixture of water with aliphatic monoalcohol, and (3) heating the resultant mixture and, after separating it in two phases, recovering the polysulfided olefin from the organic phase.

2. A composition according to claim 1, characterized in that said unsaturated monohalogenated hydrocarbon compound involved in step (2) consists of a chloride, bromide or iodide of $C_2$–$C_{12}$ linear or branched alkenyl, $C_5$–$C_{12}$ cycloalkenyl or substituted cycloalkenyl, $C_6$–$C_{12}$ arylalkenyl or substituted arylalkenyl or of a monohalogenated aliphatic or cyclic hydrocarbon comprising in its chain or its ring a heteroatom selected from sulfur, oxygen and nitrogen.

3. A composition according to one of claims 1 and 2, characterized in that said unsaturated monohalogenated hydrocarbon compound is selected from 1-chloroethylene, 1-chloropropene, 2-chloropropene, 3-chloropropene, 1-chloro 1-butene, 1-chloro 2-butene, 2-chloro 2-butene, 3-chloro 1-butene, 1-chloro 2-methylpropene, 3-chloro 2-methylpropene, 3 chloro 1-phenyl 1-propene and 2-chlorothiophene.

4. A composition according to one of claims 1 to 3, characterized in that said sulfur compound is selected from sodium sulfide, sodium hydrogenosulfide and sodium polysulfides.

5. A composition according to one of claims 1 to 4, characterized in that the proportion of element sulfur is from 0.4/1 to 7/1 gram-atoms per mole of sulfur compound.

6. A composition according to one of claims 1 to 5, characterized in that, in step (2), said "adduct" and said monohalogenated hydrocarbon compound are added to the medium containing said sulfur compound and optionally element sulfur, maintained at a temperature from 20 to 100°C, in 10 minutes to 3 hours, and in that, in step (3), the mixture is heated to a temperature from 50°C up to reflux temperature, for 3 to 24 hours.

7. A composition according to one of claims 1 to 6, characterized in that it further comprises a step (4) wherein the product obtained from step (3) is treated with a basic compound.

8. A composition according to one of claims 1 to 7, characterized in that, from step (2), the operations are performed in a continuous manner, the reactants used in step (2) being contacted in parallel streams and according to a multiple contact procedure.

9. A composition according to one of claims 1 to 8, characterized in that a part of up to about 90% by moles of the unsaturated monohalogenated hydrocarbon compound involved in step (2) is replaced with an equivalent molar amount of at least one saturated monohalogenated hydrocarbon compound and/or at least one monohalogenated hydrocarbon compound comprising at least one functional group selected from alcohol, phenol, carboxylic acid, amine, amide and thiol groups.

10. Gear oil composition, characterized in that it comprises a major proportion of mineral or synthetic lubricating oil and, as an additive, from 0.5 to 7% by weight of at least one polysulfided olefin composition according to one of claims 1 to 9.

11. Metal working oil composition, characterized in that it comprises a major proportion of mineral lubricating oil and, as an additive, from 0.1 to 10% by weight of at least one polysulfided olefin composition according to one of claims 1 to 9.